# FASCICULE DE BREVET EUROPEEN

(11) **EP 2 839 405 B1**
(45) Date de publication et mention de la délivrance du brevet: **16.03.2016**
(21) Numéro de dépôt: 13713921.8
(22) Date de dépôt: 04.04.2013
(51) Int. Cl.: G06F 21/55, G06F 21/85, G06F 12/14

(54) **SYSTEME DE GESTION D'APPLICATIONS SECURISEES ET NON SECURISEES SUR UN MEME MICROCONTROLEUR**
SYSTEM ZUR VERWALTUNG SICHERER UND UNSICHERER ANWENDUNGEN AUF EIN UND DEMSELBEN MIKROKONTROLLER
SYSTEM FOR MANAGING SECURE AND NONSECURE APPLICATIONS ON ONE AND THE SAME MICROCONTROLLER

(30) Priorité: 18.04.2012 FR 1253552
(43) Date de publication de la demande: 25.02.2015
(73) Titulaire: Schneider Electric Industries SAS, 92500 Rueil-Malmaison (FR)
(72) Inventeur: JARAUDIAS, Patrice, F-06410 Biot (FR)
(74) Mandataire: Dufresne, Thierry
(86) Numéro de dépôt international: PCT/EP2013/057116
(87) Numéro de publication internationale: WO 2013/156314

(56) Documents cités:
- WO-A1-2004/099954
- US-A1- 2003 200 451
- US-A1- 2004 003 262
- US-A1- 2007 088 857
- US-A1- 2008 114 906
- US-B1- 6 963 946
- US-B2- 7 389 390

## Description

### Domaine technique de l'invention

La présente invention se rapporte à un système pour gérer des applications présentant un niveau de sécurité et d'intégrité élevé ainsi que des applications ne présentant pas de criticité particulière, sur un même système de microcontrôleur.

Ainsi, la présente invention concerne la gestion de systèmes critiques du point de vue de la sécurité et de l'intégrité, dans le cadre du fonctionnement simultané, sur un même contrôleur, d'applications critiques, dites "safe", et présentant donc un niveau d'intégrité et de sécurité élevé et garanti, et d'applications non critiques, dites "no safe", et présentant un niveau d'intégrité et de sécurité non garanti.

### Etat de la technique

Les systèmes concernés par la présente invention sont des contrôleurs présentant des architectures avec plusieurs processeurs ou micro-processeurs et le système selon l'invention adresse leur utilisation dans un environnement sensible à des problématiques de sécurité, associées à une problématique générale de certification reconnue de ces systèmes, pour garantir la sécurité et l'intégrité. La norme SIL (pour Safety Integrity Level en anglais, signifiant Niveau de Sécurité Intégré) sert par exemple à apprécier la fiabilité des fonctions de sécurité des systèmes électriques et électroniques programmables et à donner de telles certifications. Il existe différents "niveaux de sécurité intégrés" SIL, allant de 1 à 4, du moins sécurisé au plus sécurisé, notamment définis dans les "European Functional Safety standards" signifiant "standards européens de sûreté fonctionnelle".

Actuellement, pour prendre en compte la problématique ayant trait à la coexistence d'applications dites "safe" (c'est-à-dire impliquant un niveau d'intégrité et de sécurité élevé et garanti) et d'applications "no safe" (c'est-à-dire n'impliquant pas un niveau d'intégrité et de sécurité élevé et garanti), les technologies connues concernent essentiellement les notions de virtualisation et d'hyperviseurs.

L'homme du métier possède dans ses connaissances générales les principales caractéristiques de ces technologies. Brièvement, on rappelle que les technologies de virtualisation consistent en un mécanisme logiciel de sécurité dans lequel une couche de gestion, occupée par exemple par un hyperviseur, présentant un très haut niveau de fiabilité, comprend des moyens pour séparer des plates-formes logicielles indépendantes évoluant sur un même processeur. Pour ce faire, ledit hyperviseur gère une ou plusieurs unités de gestion de la mémoire, usuellement dénommées MMU pour Memory Management Unit, sur la base d'une unité de gestion de la mémoire par processeur, permettant de cloisonner entre les différentes applications l'utilisation de ressources, notamment d'un espace mémoire, partagées.

Un tel hyperviseur peut présenter la capacité de gérer de façon indépendante plusieurs processeurs; par exemple, ledit hyperviseur peut avoir la capacité de redémarrer un processeur associé à un système d'exploitation sans redémarrer les autres processeurs.

A titre d'illustration d'une technologie mettant en oeuvre les techniques de virtualisation mentionnées ci-dessus, on pourra se référer au document EP1067461 A1. Par ailleurs, les documents US2008114906A1 et US7389390B2 décrivent des systèmes à plusieurs processeurs dotés d'au moins une interface d'échange avec au moins un périphérique.

Le système de la demande US2008114906 A1 comprend aussi des unités de gestion mémoire dédiées aux entrées/sorties, en anglais "IOMMU", permettant de protéger les accès mémoire effectués à partir des périphériques du système. Ce mécanisme est prévu en particulier pour sécuriser le système à l'encontre de périphériques malveillants et car l'usage d'adresses physiques par les périphériques se prête mal à la virtualisation.

Cependant, si elle répond à la problématique générale de gestion de la coexistence d'applications "safe" et "no safe" sur un même système de microcontrôleur, la mise en oeuvre d'un hyperviseur présente certains inconvénients. D'abord, l'utilisation d'un hyperviseur dégrade les performances d'un système car cet outil consomme des ressources et entraîne un ralentissement du système. Cela peut nuire également à des aspects de contraintes "temps-réel" associées à certaines applications, qu'elles soient "safe" ou "no safe". L'hyperviseur doit de plus être lui-même certifié, par exemple SIL, de même que le système d'exploitation qui exécute les applications "safe". Les logiciels qui gèrent les périphériques maîtres doivent, de plus, être partitionnés pour exécuter la partie critique sous le contrôle de l'hyperviseur, et la partie non critique dans le système d'exploitation de manière standard. Ainsi, des parties de pilotes doivent être intégrées dans l'hyperviseur et faire par conséquent l'objet, également, d'une certification.

Par ailleurs, ce type d'équipement, avec ou sans certification, présente aujourd'hui un coût d'acquisition très élevé.

Ainsi, le problème technique visé par la présente invention peut être considéré comme la recherche d'un système permettant de gérer la coexistence d'applications "safe" et "no safe" sur un même système de microcontrôleur, à des coûts réduits, donc en s'affranchissant des technologies connues mais onéreuses impliquant virtualisation et hyperviseur certifié. L'invention permet, de manière induite, de limiter la quantité et la complexité du code nécessitant une certification. Dans son principe, elle cible particulièrement la gestion des périphériques maîtres, par l'insertion de cellules d'isolation sécurisée de la mémoire, de préférence certifiées, permettant de garder le logiciel qui gère ces périphériques maîtres dans la partie du code n'ayant pas besoin de faire l'objet d'une certification, et ainsi d'utiliser des pilotes standards.

### Exposé de l'invention

A cet effet, l'invention a pour objet un système de microcontrôleur électronique comportant :
- au moins deux processeurs dont un processeur, dit processeur sécurisé, est dédié aux applications impliquant un niveau de sécurité et d'intégrité garanti ;
- au moins une interface d'échange avec au moins un périphérique, ledit périphérique étant maître utilisateur dudit système de microcontrôleur électronique ;
- des moyens d'accès à un espace mémoire partagé ;
- une matrice d'interconnexion pour interconnecter ladite interface d'échange, lesdits processeurs et lesdits moyens d'accès à un espace mémoire partagé.

Selon l'invention, le système de microcontrôleur électronique comprend par ailleurs des moyens de gestion d'applications impliquant un niveau de sécurité et d'intégrité garanti et d'applications présentant un niveau de sécurité et d'intégrité non garanti, et ladite interface d'échange coopère avec une cellule d'isolation sécurisée de la mémoire située entre ledit périphérique maître utilisateur et la matrice d'interconnexion. De plus, le système de microcontrôleur selon l'invention comporte plusieurs périphériques maîtres utilisateurs ayant chacun une cellule d'isolation sécurisée de la mémoire, chaque cellule d'isolation sécurisée de la mémoire étant gérée par le processeur sécurisé.

Avantageusement, chaque processeur est doté d'une unité de gestion de la mémoire sécurisée.

Avantageusement, le processeur sécurisé est vierge de tout système d'exploitation, le ou les autre(s) processeur(s) présentant un système d'exploitation standard.

Alternativement, le processeur sécurisé comporte un système d'exploitation spécifique, le ou les autre(s) processeur(s) présentant un système d'exploitation standard, ledit système d'exploitation spécifique étant différent dudit système d'exploitation standard.

Selon un mode de réalisation, le système de microcontrôleur comporte trois processeurs configurés de telle manière que :
- un premier processeur est destiné à la mise en oeuvre d'applications impliquant un niveau de sécurité et d'intégrité non garanti et s'appuie sur un premier système d'exploitation standard ;
- un deuxième processeur est destiné à la mise en oeuvre d'applications impliquant un niveau de sécurité et d'intégrité non garanti correspondant à des fonctions de communication et d'échanges, et s'appuie sur un deuxième système d'exploitation standard, pouvant être identique au premier système d'exploitation standard ;
- un troisième processeur est dédié à la mise en oeuvre d'applications impliquant un niveau de sécurité et d'intégrité garanti et ne s'appuie sur aucun système d'exploitation, ou s'appuie sur un troisième système d'exploitation distinct des premier et deuxième systèmes d'exploitation standards.

Avantageusement, dans le cas où le périphérique maître utilisateur cherche à accéder à une adresse de l'espace mémoire partagé, ledit espace mémoire partagé présentant une plage d'adresses protégées, ladite cellule d'isolation sécurisée de la mémoire située entre ledit périphérique maître utilisateur et la matrice d'interconnexion comprend un filtre s'appliquant sur ladite adresse de la mémoire à laquelle le périphérique maître utilisateur cherche à accéder pour mettre en oeuvre des moyens d'interdiction d'écriture par ledit périphérique maître utilisateur à ladite adresse si ladite adresse appartient à la plage d'adresses protégées de la mémoire partagée, et deux comparateurs pour vérifier ladite adresse respectivement avant et après filtrage par ledit filtre de manière à détecter une éventuelle erreur survenue concernant ladite adresse.

### Brève description des figures

D'autres caractéristiques et avantages vont apparaître dans la description détaillée qui suit faite en regard des dessins annexés qui représentent :
- la figure 1 : un premier schéma fonctionnel représentant la mise en oeuvre du système selon l'invention ;
- la figure 2 : un exemple de mode de réalisation d'une cellule d'isolation sécurisée de la mémoire dans le système selon l'invention ;
- la figure 3 : un second schéma fonctionnel illustrant un exemple de système selon l'invention.

### Description détaillée d'au moins un mode de réalisation

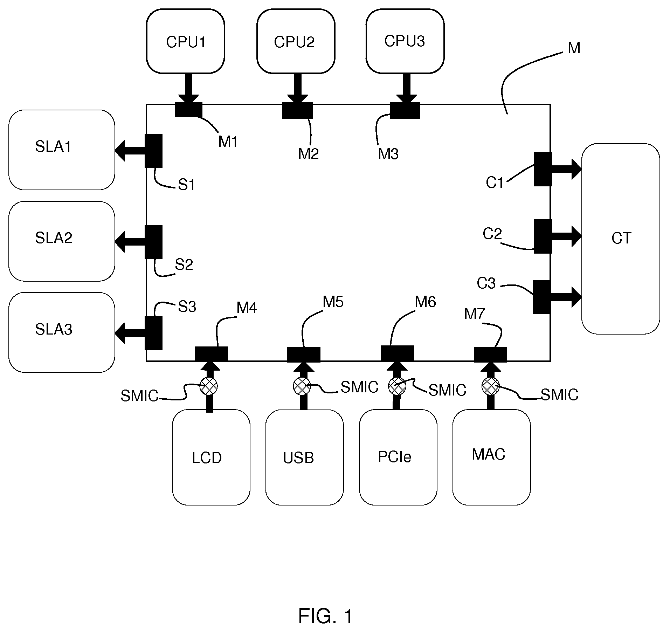

En référence à la figure 1, le système selon l'invention concerne la gestion d'applications "safe", c'est-à-dire présentant un niveau de sûreté, de sécurité et d'intégrité qui soit à la fois garanti et élevé, et d'applications "no safe", c'est-à-dire présentant un niveau de sûreté non garanti.

La figure 1 représente, schématiquement et partiellement, un exemple de système de microcontrôleur électronique comportant trois processeurs qui accèdent à l'ensemble des ressources du système de microcontrôleur par l'intermédiaire des ports maîtres M1, M2, M3 prévus pour les processeurs. L'exemple de la figure 1 comporte trois processeurs, mais il est clair que l'invention s'applique également à tout système de microcontrôleur électronique doté de plusieurs processeurs, par exemple deux processeurs ou plus que trois processeurs. Les différents processeurs du système de microcontrôleur peuvent être différents les uns des autres. Par contre, les différents processeurs peuvent être intégrés dans un même composant électronique, vu qu'ils sont reliés entre eux par une matrice d'interconnexion.

Le système de microcontrôleur interagit par ailleurs avec un espace mémoire partagé par l'intermédiaire d'un contrôleur de mémoire CT par les ports C1, C2, C3, et contrôle des fonctions mises en oeuvre par des périphériques esclaves SLA1, SLA2, SLA3 n'ayant pas l'initiative de l'utilisation du microcontrôleur, par l'intermédiaire de ports esclaves S1, S2, S3. Une interface liaison série, une interface SDcard, une interface CompactFlash sont des exemples de périphériques esclaves.

Enfin, le système de microcontrôleur est sollicité par des périphériques maîtres utilisateurs reliés à lui par l'intermédiaire d'interfaces dédiées et qui accèdent aux ressources du microcontrôleur par l'intermédiaire des ports maîtres M4, M5, M6, M7 prévus pour lesdits périphériques maîtres. Ces périphériques sont dénommés "maîtres utilisateurs" car ce sont des utilisateurs maître du système de microcontrôleur, en ce sens qu'ils ont la capacité d'accéder eux-mêmes à l'espace mémoire partagé, contrairement aux périphériques esclaves qui ne peuvent pas y accéder directement.

Les périphériques maîtres utilisateurs sont en particulier des périphériques correspondant à des standards, par exemple des écrans tactiles LCD (pour Liquid Crystal Display c'est-à-dire écran à cristaux liquides), des périphériques USB (pour Universal Serial Bus, du nom de la norme bien connue relative à un bus informatique en transmission série), des cartes d'extension PCIe, ou PCI Express (pour Peripheral Component Interconnect Express, du nom du standard connu permettant la connexion de cartes d'extension sur une carte mère), ou encore des cartes Ethernet MAC pour la connexion à un réseau.

La matrice d'interconnexion M réalise l'interconnexion entre les processeurs CPU1, CPU2, CPU3, l'espace mémoire partagé, via le contrôleur de mémoire CT, les périphériques maîtres utilisateurs, par exemple LCD, USB, PCIe, MAC, et leurs interfaces dédiées, et les périphériques esclaves SLA1, SLA2, SLA3.

Selon l'invention, le système de microcontrôleur représenté à la figure 1 comporte en outre des cellules d'isolation sécurisée de la mémoire SMIC situées entre lesdits périphériques maîtres utilisateurs LCD, USB, PCIe, MAC et la matrice d'interconnexion M. En pratique, chaque périphérique maître utilisateur est connecté à la matrice d'interconnexion M via une cellule d'isolation sécurisée de la mémoire SMIC distincte.

Ces cellules d'isolation sécurisée de la mémoire SMIC sont avantageusement aptes à filtrer les accès à l'espace mémoire partagé requis par les périphériques maîtres utilisateurs LCD, USB, PCIe, MAC avant leur transmission, via la matrice d'interconnexion M, au contrôleur de mémoire CT de l'espace mémoire partagé.

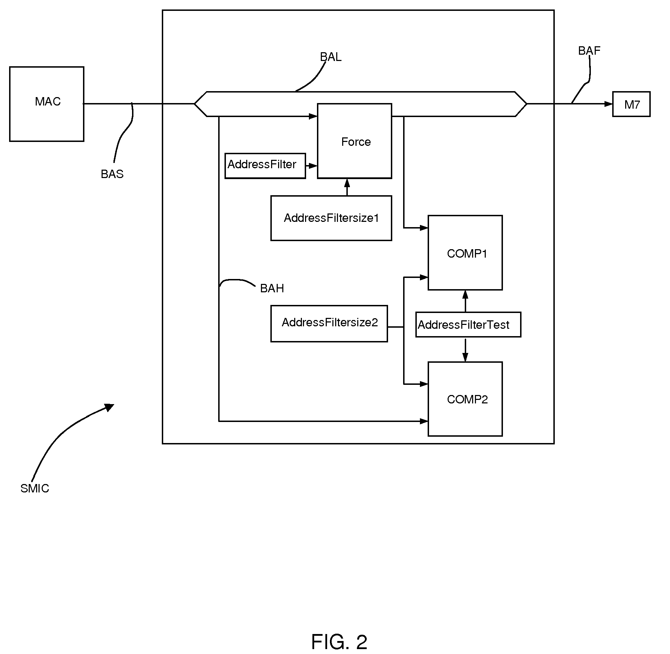

Un exemple de réalisation d'une telle cellule d'isolation sécurisée de la mémoire SMIC est présenté à la figure 2.

Ainsi, la figure 2 représente une architecture de cellule d'isolation sécurisée de la mémoire SMIC située entre un périphérique maître utilisateur du microcontrôleur, tel qu'une carte Ethernet MAC, et la matrice d'interconnexion M.

Dans cet exemple, on considère un bus d'adresse source BAS de 32 bits en provenance du périphérique maître MAC. Les bits de poids fort, par exemple les bits 20 à 31, sont acheminés par un bus d'adresse "fort" BAH de 12 bits vers la fonction de forçage Force tandis que les bits d'adresse de poids faible, par exemple les bits 0 à 19, sont transmis sans filtrage via le bus d'adresse "faible" BAL de 20 bits. L'ensemble des 32 bits, comprenant les 20 bits filtrés et les 12 bits non filtrés, est ensuite dirigé sur le port maître M7 via le bus d'adresse filtré BAF. La fonction de forçage Force est apte à forcer l'adresse à laquelle le périphérique maître MAC est autorisé à accéder, notamment pour écrire une nouvelle valeur. Un premier registre Addressfilter dicte la valeur de l'adresse de forçage à la fonction de forçage Force.

Dans le cadre de la présente invention, deux comparateurs COMP1 et COMP2 testent, respectivement avant et après forçage par la fonction de forçage Force, l'adresse à laquelle le périphérique maître MAC tente d'accéder, notamment pour écrire une nouvelle valeur, et la valeur de d'adresse présentée sur l'interface M7. Les deux comparateurs COMP1 et COMP2 vérifient que l'adresse à tester correspond bien à une adresse autorisée en comparant la valeur des bits d'adresse haute, par exemple les bits de poids fort 20 à 31, à la valeur renseignée dans un deuxième registre AddressFilterTest, par exemple d'une taille de 12 bits. Si les comparateurs COMP1 ou COMP2 détectent une inégalité entre les adresses comparées, une erreur d'adressage est levée de manière à permettre la détection de ladite erreur.

Dans le cadre de la présente invention, la taille de la plage des bits d'adresse à filtrer, en l'espèce à forcer et à comparer, peut être variable. La valeur renseignée dans un troisième registre AddressFilterSize1 dicte ainsi le nombre de bits d'adresse à forcer tandis que la valeur dans un quatrième registre AddressFilterSize2 dicte le nombre de bits à comparer.

Cette cellule d'isolation sécurisée de la mémoire SMIC présentée à la figure 2 est apte à satisfaire aux critères de certification définis par les normes vis-à-vis de la sécurité des équipements industriels car l'injection d'une faute dans le dispositif de forçage est détectée à tout moment.

En continu, durant l'exécution de l'application considérée, la fonction de forçage Force prévient tout risque d'écriture du périphérique maître MAC en dehors de la plage d'adresses qui lui est attribuée. Un défaut du périphérique maître MAC n'interfère pas sur la sécurité du microcontrôleur ou de l'équipement qui l'intègre, ne perturbant pas de données protégées ; par ailleurs, un tel défaut est nécessairement détecté. Un défaut sur la fonction de forçage Force, sur le premier registre AddressFilter ou le troisième registre AddressFiltersize1 peut interférer sur la sécurité du microcontrôleur ou de l'équipement qui l'intègre, mais ce défaut sera détecté par la cellule d'isolation sécurisée de la mémoire SMIC au travers des erreurs de comparaison. Dans ce cas, le microcontrôleur ou l'équipement qui l'intègre sera mis en position de sécurité.

Les dispositifs de comparaison, à savoir les comparateurs COMP1, COMP2, et le quatrième registre AddressFiltersize2, sont par définition des outils de diagnostic ; ils ne peuvent pas directement attenter à l'intégrité des données de l'application en cours d'exécution. Durant des phases de test, dont de préférence au moins une phase de test au démarrage de l'équipement intégrant le microcontrôleur, l'application peut être suspendue et ses données testées par injection d'erreur, par exemple d'une valeur dans le premier registre AddressFilter différente de celle attendue au niveau du deuxième registre AddressFiltertest.

Ainsi, la cellule d'isolation sécurisée de la mémoire SMIC présentée à la figure 2 permet de mettre en oeuvre l'invention.

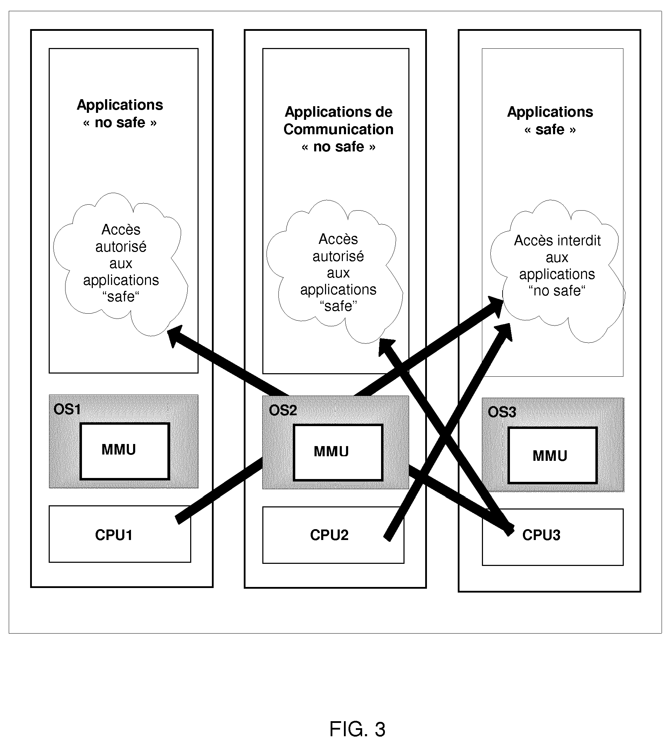

La figure 3 présente un mode de réalisation préféré de l'invention dans lequel le système de microcontrôleur comprend trois processeurs. Selon le mode de réalisation de la figure 3, le système de microcontrôleur selon l'invention est alors configuré de telle manière que :
- un premier processeur CPU1 est consacré à la mise en oeuvre d'applications "no safe" et s'appuie sur un premier système d'exploitation standard OS1 ;
- un deuxième processeur CPU2 est consacré à la mise en oeuvre d'applications "no safe" correspondant à des fonctions de communication et d'échanges, notamment par exemple avec des équipements connectés à des bus USB ou Ethernet gérés par le système de microcontrôleur, et s'appuie sur un système d'exploitation standard OS2, pouvant être identique au premier système d'exploitation standard OS1 ;
- un troisième processeur CPU3 (processeur dit sécurisé) est consacré à la mise en oeuvre d'applications "safe" et ne s'appuie sur aucun système d'exploitation, ou s'appuie sur un troisième système d'exploitation OS3 distinct des premier et deuxième systèmes d'exploitation standards OS1, OS2.

D'une façon préférée, le troisième processeur pourra être différent des deux précédents. En effet, les applications "safe" ne nécessitent par exemple pas la même puissance de calcul que les applications "no safe".

Au niveau de chacun des systèmes d'exploitation OS1, OS2, OS3 est prévue respectivement une unité de gestion de la mémoire MMU interdisant l'accès aux applications "safe" par les applications "no safe".

De façon avantageuse, seules ces unités de gestion de la mémoire MMU ont besoin d'être certifiées du point de vue de la sécurité pour obtenir une certification de l'ensemble du système.

Avantageusement, en vue de l'obtention d'une certification de sécurité fonctionnelle d'un équipement industriel basé sur un tel système de microcontrôleur, la certification de ces unités de gestion de la mémoire, peut s'avérer être une condition à remplir suffisante pour le critère d'isolation mémoire entre applications.

D'autre part, lorsque la cellule d'isolation sécurisée de la mémoire (SMIC) de chaque périphérique maître utilisateur (LCD, USB, PCIe, MAC) est gérée par l'application "Safe" du processeur dit sécurisé (CPU3), cela permet de se dispenser avantageusement de la certification des pilotes logiciel des périphériques maitre utilisateur. En effet, même si les pilotes logiciels des périphériques ne sont pas certifiés en eux-mêmes, la gestion des cellules d'isolation sécurisée de la mémoire par une application "Safe" permet d'éviter une éventuelle mauvaise gestion de mémoire intempestive venant de ces pilotes logiciel.

En résumé, le système selon l'invention comprend les moyens pour assurer la gestion sécurisée d'applications "safe" et "no safe" sur un même microcontrôleur, en particulier par l'intermédiaire de la mise en oeuvre d'une cellule d'isolation sécurisée de la mémoire judicieusement située entre les périphériques maîtres utilisateurs dudit microcontrôleur et la matrice d'interconnexion qu'il comporte.

## Revendications

1. Système de microcontrôleur électronique comprenant un microcontrôleur électronique, et comportant :
- au moins deux processeurs (CPU1, CPU2, CPU3) dont un processeur (CPU3), dit processeur sécurisé, est dédié à des applications impliquant un niveau de sécurité et d'intégrité garanti ;
- au moins une interface d'échange avec au moins un périphérique (LCD, USB, PCIe, MAC), ledit périphérique étant maître utilisateur dudit système de microcontrôleur électronique ;
- des moyens d'accès (CT) à un espace mémoire partagé ;
- une matrice d'interconnexion (M) pour interconnecter ladite interface d'échange, lesdits processeurs (CPU1, CPU2, CPU3) et lesdits moyens d'accès (CT) à un espace mémoire partagé,
le système de microcontrôleur électronique comprenant par ailleurs des moyens de gestion d'applications impliquant un niveau de sécurité et d'intégrité garanti et d'applications présentant un niveau de sécurité et d'intégrité non garanti,
ladite interface d'échange coopérant avec une cellule d'isolation sécurisée de la mémoire (SMIC) située entre ledit périphérique maître utilisateur (LCD, USB, PCIe, MAC) et ladite matrice d'interconnexion (M), et le système de microcontrôleur comportant en outre plusieurs périphériques maîtres utilisateurs (LCD, USB, PCIe, MAC) ayant chacun une cellule d'isolation sécurisée de la mémoire (SMIC), chaque cellule d'isolation sécurisée de la mémoire (SMIC) étant gérée par le processeur sécurisé (CPU3).

2. Système de microcontrôleur selon la revendication 1, **caractérisé en ce que** chaque processeur (CPU1, CPU2, CPU3) est doté d'une unité de gestion de la mémoire sécurisée.

3. Système de microcontrôleur selon l'une des revendications 1 à 2, **caractérisé en ce que** ledit processeur sécurisé (CPU3) est vierge de tout système d'exploitation, le ou les autre(s) processeur(s) (CPU1, CPU2) présentant un système d'exploitation standard (OS1, OS2).

4. Système de microcontrôleur selon l'une des revendications 1 à 2, **caractérisé en ce que** ledit processeur sécurisé (CPU3) comporte un système d'exploitation spécifique (OS3), le ou les autre(s) processeur(s) (CPU1, CPU2) présentant un système d'exploitation standard (OS1, OS2), ledit système d'exploitation spécifique (OS3) étant différent dudit système d'exploitation standard (OS1, OS2).

5. Système de microcontrôleur selon la revendication 1, comportant trois processeurs (CPU1, CPU2, CPU3) configurés de telle manière que :
- un premier processeur (CPU1) est destiné à la mise en oeuvre d'applications impliquant un niveau de sécurité et d'intégrité non garanti et s'appuie sur un premier système d'exploitation standard (OS1) ;
- un deuxième processeur (CPU2) est destiné à la mise en oeuvre d'applications impliquant un niveau de sécurité et d'intégrité non garanti correspondant à des fonctions de communication et d'échanges, et s'appuie sur un deuxième système d'exploitation standard (OS2), pouvant être identique au premier système d'exploitation standard (OS1) ;
- un troisième processeur (CPU3) est dédié à la mise en oeuvre d'applications impliquant un niveau de sécurité et d'intégrité garanti et ne s'appuie sur aucun système d'exploitation, ou s'appuie sur un troisième système d'exploitation (OS3) distinct des premier et deuxième systèmes d'exploitation standards (OS1, OS2).

6. Système de microcontrôleur selon l'une des revendications précédentes, dans lequel le périphérique maître utilisateur (LCD, USB, PCIe, MAC) cherche à accéder à une adresse de l'espace mémoire partagé, ledit espace mémoire partagé présentant une plage d'adresses protégées, **caractérisé en ce que** ladite cellule d'isolation sécurisée de la mémoire (SMIC) située entre ledit périphérique maître utilisateur (LCD, USB, PCIe, MAC) et la matrice d'interconnexion (M) comprend un filtre s'appliquant sur ladite adresse de la mémoire à laquelle le périphérique maître utilisateur (LCD, USB, PCIe, MAC) cherche à accéder pour mettre en oeuvre des moyens d'interdiction d'écriture par ledit périphérique maître utilisateur (LCD, USB, PCIe, MAC) à ladite adresse si ladite adresse appartient à la plage d'adresses protégées de la mémoire partagée, et deux comparateurs (COMP1, COMP2) pour vérifier ladite adresse respectivement avant et après filtrage par ledit filtre de manière à détecter une éventuelle erreur survenue concernant ladite adresse.

## Patentansprüche

1. Elektronisches Mikrocontrollersystem, das einen elektronischen Mikrocontroller enthält und aufweist:
- mindestens zwei Prozessoren (CPU1, CPU2, CPU3) von denen ein Prozessor (CPU3), gesicherter Prozessor genannt, für Anwendungen bestimmt ist, die einen garantierten Sicherheits- und Integritätslevel implizieren;
- mindestens eine Austauschschnittstelle mit mindestens einem Peripheriegerät (LCD, USB, PCIe, MAC), wobei das Peripheriegerät Hauptnutzer des elektronischen Mikrocontrollersystems ist;
- Zugriffseinrichtungen (CT) auf einen gemeinsam genutzten Speicherplatz;
- eine Verbindungsmatrix (M), um die Austauschschnittstelle, die Prozessoren (CPU1, CPU2, CPU3) und die Zugriffseinrichtungen (CT) auf einen gemeinsam genutzten Speicherplatz miteinander zu verbinden,
wobei das elektronische Mikrocontrollersystem außerdem Einrichtungen zur Verwaltung von Anwendungen, die einen garantierten Sicherheits- und Integritätslevel implizieren, und von Anwendungen enthält, die einen nicht garantierten Sicherheits- und Integritätslevel aufweisen,
wobei die Austauschschnittstelle mit einer gesicherten Isolierzelle des Speichers (SMIC) zusammenwirkt, die sich zwischen dem Hauptnutzer-Peripheriegerät (LCD, USB, PCIe, MAC) und der Verbindungsmatrix (M) befindet, und das Mikrocontrollersystem außerdem mehrere Hauptnutzer-Peripheriegeräte (LCD, USB, PCIe, MAC) aufweist, die je eine gesicherte Isolierzelle des Speichers (SMIC) haben, wobei jede gesicherte Isolierzelle des Speichers (SMIC) vom gesicherten Prozessor (CPU3) verwaltet wird.

2. Mikrocontrollersystem nach Anspruch 1, **dadurch gekennzeichnet, dass** jeder Prozessor (CPU1, CPU2, CPU3) mit einer Verwaltungseinheit des gesicherten Speichers ausgestattet ist.

3. Mikrocontrollersystem nach einem der Ansprüche 1 bis 2, **dadurch gekennzeichnet, dass** der gesicherte Prozessor (CPU3) keinerlei Betriebssystem aufweist, während der andere oder die anderen Prozessor(en) (CPU1, CPU2) ein Standard-Betriebssystem (OS1, OS2) aufweisen.

4. Mikrocontrollersystem nach einem der Ansprüche 1 bis 2, **dadurch gekennzeichnet, dass** der gesicherte Prozessor (CPU3) ein spezifisches Betriebssystem (OS3) aufweist, während der andere oder die anderen Prozessor(en) (CPU1, CPU2) ein Standard-Betriebssystem (OS1, OS2) aufweisen, wobei das spezifische Betriebssystem (OS3) sich vom Standard-Betriebssystem (OS1, OS2) unterscheidet.

5. Mikrocontrollersystem nach Anspruch 1, das drei Prozessoren (CPU1, CPU2, CPU3) aufweist, die so konfiguriert sind, dass:
- ein erster Prozessor (CPU1) für die Durchführung von Anwendungen bestimmt ist, die einen nicht garantierten Sicherheits- und Integritätslevel implizieren, und sich auf ein erstes Standard-Betriebssystem (OS1) stützt;
- ein zweiter Prozessor (CPU2) für die Durchführung von Anwendungen bestimmt ist, die einen nicht garantierten Sicherheits- und Integritätslevel implizieren, der Kommunikations- und Austauschfunktionen entspricht, und sich auf ein zweites Standard-Betriebssystem (OS2) stützt, das gleich dem ersten Standard-Betriebssystem (OS1) sein kann;
- ein dritter Prozessor (CPU3) für die Durchführung von Anwendungen bestimmt ist, die einen garantierten Sicherheits- und Integritätslevel implizieren, und sich auf kein Betriebssystem stützt, oder sich auf ein drittes Betriebssystem (OS3) stützt, das sich von den ersten und zweiten Standard-Betriebssystemen (OS1, OS2) unterscheidet.

6. Mikrocontrollersystem nach einem der vorhergehenden Ansprüche, wobei das Hauptnutzer-Peripheriegerät (LCD, USB, PCIe, MAC) auf eine Adresse des gemeinsam genutzten Speicherplatzes zuzugreifen versucht, wobei der gemeinsam genutzte Speicherplatz einen Bereich geschützter Adressen aufweist, **dadurch gekennzeichnet, dass** die gesicherte Isolierzelle des Speichers (SMIC), die sich zwischen dem Hauptnutzer-Peripheriegerät (LCD, USB, PCIe, MAC) und der Verbindungsmatrix (M) befindet, einen Filter, der an die Adresse des Speichers angewendet wird, auf die das Hauptnutzer-Peripheriegerät (LCD, USB, PCIe, MAC) zuzugreifen versucht, um Einrichtungen zum Verbot des Schreibens durch das Hauptnutzer-Peripheriegerät (LCD, USB, PCIe, MAC) an der Adresse einzusetzen, wenn die Adresse zum Bereich geschützter Adressen des gemeinsam genutzten Speichers gehört, und zwei Komparatoren (COMP1, COMP2) enthält, um die Adresse vor bzw. nach dem Filtern durch den Filter zu überprüfen, um einen die Adresse betreffenden aufgetretenen möglichen Fehler zu erfassen.

## Claims

1. An electronic microcontroller system comprising an electronic microcontroller, and comprising:
- at least two processors (CPU1, CPU2, CPU3) of which one processor (CPU3), called the secure processor, is dedicated to applications involving a guaranteed level of security and integrity;
- at least one exchange interface for exchanges with at least one peripheral (LCD, USB, PCIe, MAC), said peripheral being user master of said electronic microcontroller system;
- means of access (CT) to a shared memory space;
- an interconnection matrix (M) for interconnecting said exchange interface, said processors (CPU1, CPU2, CPU3) and said means of access (CT) to a shared memory space,
the electronic microcontroller system moreover comprising means for managing applications involving a guaranteed level of security and integrity and applications exhibiting a non-guaranteed level of security and integrity,
said exchange interface cooperating with a cell for secure isolation of the memory (SMIC) situated between said user master peripheral (LCD, USB, PCIe, MAC) and said interconnection matrix (M), and the microcontroller system furthermore comprising several user master peripherals (LCD, USB, PCIe, MAC) each having a cell for secure isolation of the memory (SMIC), each cell for secure isolation of the memory (SMIC) being managed by the secure processor (CPU3).

2. The microcontroller system as claimed in claim 1, **characterized in that** each processor (CPU1, CPU2, CPU3) is furnished with a unit for managing the secure memory.

3. The microcontroller system as claimed in one of claims 1 to 2, **characterized in that** said secure processor (CPU3) is devoid of any operating system, the other processor or processors (CPU1, CPU2) exhibiting a standard operating system (OS1, OS2).

4. The microcontroller system as claimed in one of claims 1 to 2, **characterized in that** said secure processor (CPU3) comprises a specific operating system (OS3), the other processor or processors (CPU1, CPU2) exhibiting a standard operating system (OS1, OS2), said specific operating system (OS3) being different from said standard operating system (OS1, OS2).

5. The microcontroller system as claimed in claim 1, comprising three processors (CPU1, CPU2, CPU3) configured in such a way that:
- a first processor (CPU1) is intended for the implementation of applications involving a non-guaranteed level of security and integrity and relies on a first standard operating system (OS1);
- a second processor (CPU2) is intended for the implementation of applications involving a non-guaranteed level of security and integrity corresponding to communication and exchange functions, and relies on a second standard operating system (OS2), that may be identical to the first standard operating system (OS1);
- a third processor (CPU3) is dedicated to the implementation of applications involving a guaranteed level of security and integrity and does not rely on any operating system, or relies on a third operating system (OS3) distinct from the first and second standard operating systems (OS1, OS2).

6. The microcontroller system as claimed in one of the preceding claims, in which the user master peripheral (LCD, USB, PCIe, MAC) seeks to access an address of the shared memory space, said shared memory space exhibiting a range of protected addresses, **characterized in that** said cell for secure isolation of the memory (SMIC) situated between said user master peripheral (LCD, USB, PCIe, MAC) and the interconnection matrix (M) comprises a filter applying to said address of the memory to which the user master peripheral (LCD, USB, PCIe, MAC) seeks access in order to implement means of prohibiting writing by said user master peripheral (LCD, USB, PCIe, MAC) at said address if said address belongs to the range of protected addresses of the shared memory, and two comparators (COMP1, COMP2) for verifying said address respectively before and after filtering by said filter so as to detect a possible error that may have arisen relating to said address.
